# EUROPEAN PATENT SPECIFICATION

(11) **EP 1 505 078 B1**
(45) Date of publication and mention of the grant of the patent: **22.04.2009**
(21) Application number: 02755886.5
(22) Date of filing: 08.08.2002
(51) Int. Cl.: C08B 37/00, A23L 1/053

(54) **METHOD OF MODIFYING GUM ARABIC**
VERFAHREN ZUR MODIFIZIERUNG VON GUMMI ARABICUM
PROCEDE DE MODIFICATION D'UNE GOMME ARABIQUE

(30) Priority: 01.05.2002 JP 2002130212; 29.05.2002 JP 2002156166
(43) Date of publication of application: 09.02.2005
(73) Proprietor: SAN-EI GEN F.F.I., INC., Toyonaka-shi, Osaka 561-0828 (JP)
(72) Inventor: HAYASHI, Hideo, c/o SAN-EI GEN F.F.I., INC., Toyonaka-shi, Osaka 561-8588 (JP)
(74) Representative: Müller-Boré & Partner Patentanwälte
(86) International application number: PCT/JP2002/008144
(87) International publication number: WO 2003/093324

(56) References cited:
- JP-A- 2000 166 489
- PATENT ABSTRACTS OF JAPAN vol. 2003, no. 12, 5 December 2003 (2003-12-05) -& JP 2003 321502 A (SANEI GEN FFI INC), 14 November 2003 (2003-11-14)
- G.O. PHILLIPS ET AL.: "Hydration characteristics of the gum exudate from Acacia senegal" Food Hydrocolloids, vol. 10, no. 1, 1996, pages 11-19, XP008055104 Elsevier

## Description

The present invention relates to a method for modifying gum arabic. More particularly, the invention relates to a method for enhancing the emulsifying ability of gum arabic. The invention further relates to a use of said modified gum arabic for producing an emulsifier.

Gum arabic is a naturally-occurring polymer having an excellent emulsifying ability and exhibiting low viscosities even in solutions of high concentrations and, because of these characteristics, has been in broad use as an emulsifier in the food and pharmaceutical fields. However, it is also known that gum arabic, when used as it comes, does not exhibit satisfactory emulsifying properties.

Therefore, the method for enhancing the emulsifying ability of gum arabic has so far been studied and proposed. For example, as such a method, JP Kokai H02-49001 discloses a method which comprises removing metal ions from gum arabic to obtain arabic acid and modifying it thermally to improve (modify) its emulsifying ability and JP Kokai 2000-166489 describes a method which comprises modifying a gum arabic having a loss-on-drying of not more than 50 weight % by heating it at 60-140°C for not less than 30 minutes to thereby enhance (modify) its emulsifying ability.

However, these methods have the drawback that, in the course of heating process, gum arabic melts and adheres to form syrupy masses or the surface of the body of gum arabic is excessively dehydrated or undergoes charring. When gum arabic melts, it gets stuck to the vessel to make it difficult to take out. Furthermore, once syrupy masses are formed, the modification efficiency is decreased to the extent that no sufficient improvement can be obtained in the emulsifying ability or it tends to not be easily pulverized to give a powder for use as an emulsifier and not be readily soluble in water. Furthermore, when the surface of gum arabic is excessively dehydrated, the modification of gum arabic does not proceed sufficiently and there develops a tendency toward charring. As gum arabic become charred, not only a reduction in emulsifying ability but also such troubles as emanation of an odor, formation of insoluble matter, such as charcoal, and blackening of gum arabic solutions tend to take place.

The present invention has for its object to attenuate or resolve the above problems and provide a method for modifying gum arabic so as to impart an enhanced emulsifying ability to it. More particularly, the object of the present invention is to provide a method for enhancing the emulsifying ability of gum arabic with good efficiency and a method by which a gum arabic modified so as to have a high emulsifying ability can be obtained without involving the problem of forming syrupy masses or sticking to the vessel or the trouble of excessive dehydration and charring.

Another object of the invention is to provide a thus-obtaining gum arabic having a good emulsifying ability and use of said gum arabic for producing an emulsifier.

The intensive research undertaken to overcome the above-mentioned problems led the present inventors to the finding that the above objects can be accomplished by subjecting gum arabic to a heat treatment under the herein-defined humidity and temperature conditions.

The present invention has been completed based on such findings. The present invention comprises the following embodiments.
(1) A method for modifying gum arabic which comprises a step of heating the gum arabic at a temperature of not less than 60°C in an atmosphere having a relative humidity of 30-100%.
(2) The method for modifying gum arabic according to the above item (1) wherein the gum arabic is heated in an atmosphere having a relative humidity of 70-100%.
(3) The method for modifying gum arabic according to the above item (1) or (2) wherein the gum arabic is heated under closed-system constant-humidity conditions.
(4) The method for modifying gum arabic according to any of the the above items (1)-(3) which comprises a step of heating the gum arabic at a temperature of 60-100°C in an atmosphere having a relative humidity of 30-80%.
(5) The method for modifying gum arabic according to the above item (4) wherein the gum arabic is heated in an atmosphere having a relative humidity of 60-80%, preferably a relative humidity of 70-80%.
(6) The method for modifying gum arabic according to the above item (1) which comprises a step of heating the gum arabic at a temperature of 60-150°C in an atmosphere having a relative humidity of 80-100% and cooling it to a temperature not exceeding room temperature in an atmosphere having a relative humidity of not more than 75%.
(7) The method for modifying gum arabic according to the above item (6) wherein the heating of gum arabic is heated at a temperature of 60-100°C.
(8) The method for modifying gum arabic according to the above item (1) which comprises a step of heating the gum arabic at a temperature of 60-150°C in a closed-system atmosphere having a relative humidity of 80-100% and then cooling it to room temperature in an open system.
(9) The method for modifying gum arabic according to the above item (8) wherein the gum arabic is heated at a temperature of 60-100°C.
(10) The method for modifying gum arabic according to any of the above items (1)-(9) which is a method for increasing the emulsifying ability of gum arabic.
(11) A use of the modified gum arabic obtained by the method according to any of the above items (1)-(10) for producing an emulsifier.
(12) A method for preparing an emulsion which comprises using the modified gum arabic obtained by the method according to any of the above items (1)-(10) as an emulsifier.
(13) The method for preparing an emulsion according to the above item (12) wherein the emulsion is an O/W or W/O/W emulsion which contains, as a dispersoid, at least one hydrophobic substance selected from the group consisting of essential oils, oily flavorings, oily colors, fat-soluble vitamins, polyunsaturated fatty acids, animal or vegetable oils, sucrose acetate isobutyrate, and medium-chain triglycerides.

### (1) Method for modifying gum arabic

The present invention relates to a method for modifying gum arabic so as to enhance its emulsifying ability. Therefore, the invention can be said to be "a method for enhancing the emulsifying ability of gum arabic" or "a method for preparing a gum arabic having an improved emulsifying ability".

The method of the invention can be practiced by heating gum arabic at a temperature not below 60°C in an atmosphere having a relative humidity of 30-100%.

In the method of the invention, the gum arabic subjected for modification (unmodified gum arabic) is a natural resin (polysaccharide) prepared by drying gummy exudates from the trunks and branches of Acacia senegal or Acacia seyal of the genus Acacia, family Leguminasae or any other plant belonging to the same genus. It is also possible to use the product obtained by subjecting gum arabic (unmodified) to purification treatment or a desalting treatment.

While gum arabic (unmodified) is produced in the whole region of North Africa from Etiopia to Senegal (Etiopia, Senegal, Nigeria, Kordofan of North Africa, the basins of tributaries of the River Nile, and Ameraha District), the gum arabic (unmodified) produced in any of the above areas can be employed in the present invention regardless of its origin.

Furthermore, gum arabic (unmodified) is not particularly restricted in its water content. Gum arabic (unmodified) which is usually available from commercial sources shows a reduction in water content when dried by heating at 105°C for 6 hours (loss on drying) of not over 40 weight %, preferably not over 30 weight % , more preferably not over 20 weight %. In the present invention, too, the gum arabic (unmodified) having such a water content (loss-on-drying) can be liberally selected and used regardless of its water content.

Moreover, while gum arabic (unmodified) can be usually procured in such forms as blocks, beads, crude pulverizates (including roughly crushed or broken dried solid gummy exudates), granules, pellets, and powders, any of such forms can be used indiscriminately in the present invention. The preferred are blocks, beads, crude pulverizates (including roughly crushed or broken dried solid gummy exudates), granules or pellets having an average particle diameter not less than 1 mm, preferably larger than 1 mm. When the particle diameter is considerably smaller than 1 mm, there occur such troubles as that the heat treatment causes the particles to adhere to each other and develops a pasty consistency or sticks to the vessel thereby forming a film and reducing the efficiency of modification, the subsequent handling of the product being rendered difficult or the product becoming liable to undergo discoloration. There is no particular upper limit to the average particle diameter but from modification efficiency points of view, the average particle diameter is preferably not more than 100 mm. Therefore, the average particle diameter is preferably larger than 1 mm but not larger than 100 mm. The more preferred range is 2-50 mm.

In the modification method of the invention, the heat treatment of gum arabic (unmodified) is preferably carried out at a temperature not below 60°C in an atmosphere having a relative humidity of not less than 30%.

As demonstrated in the experiment examples set forthhereinafter, the temperature adopted for the heat treatment of gum arabic (unmodified) is positively correlated with the emulsifying ability of the modified gum arabic; thus the higher the temperature is, the more greatly is the emulsifying ability of gum arabic improved and the shorter is the time in which the emulsifying ability of gum arabic can be improved with efficiency. Therefore, insofar as the object of attaining an improved emulsifying ability is not impaired, there is no upper limit to the heating temperature.

However, when the heating temperature exceeds 100°C, particularly 150°C, there may develop such troubles as the heat treatment causing discoloration, formation of insolubles, or emanation of a foreign odor. Particularly in the high-temperature treatment in an atmosphere having a relative humidity of not less than 80%, the problem of agglomeration or adhesion due to melting tends to develop and may interfere with subsequent operations. Therefore, the upper limit to heating temperature is preferably 150°C, more preferably 100°C, still more preferably 90°C, and further more preferably 80°C.

Furthermore, as can be seen from the experiment examples presented hereinafter, the relative humidity adopted for the heat treatment of gum arabic (unmodified) is positively correlated with the emulsifying ability of the modified gum arabic; thus the higher the relative humidity is, the more greatly is the emulsifying ability improved and the shorter is the time in which the emulsifying ability of gum arabic can be improved with efficiency. While a relative humidity of not less than 30% can be generally adopted, the relative humidity is preferably not less than 50%, more preferably not less than 60%, still more preferably not less than 65%, most preferably not less than 70%. Insofar as the object of attaining an improved emulsifying ability is not impaired, the upper limit to relative humidity is not particularly restricted. Therefore, the relative humidity to be adopted for the heat treatment of gum arabic can be suitably selected from the range of usually 30-100%, preferably 50-100%, more preferably 60-100%, still more preferably 65-100%, most preferably 70-100%.

However, when the relative humidity exceeds 80%, particularly 90%, and especially in the heat treatment at a temperature of 60°C or higher, the gum arabic in such forms as blocks, beads, crude pulverizates, granules, or pellets of gum arabic tends to adhere to each other to form large masses (blocking phenomenon) and, as a consequence, interfere with subsequent handling. This trouble developing in cases where the heat treatment is carried out in a high-humidity atmosphere of 80-100%, particularly over 80%, can be eliminated by cooling the heated load at a relative humidity lower than the relative humidity used for heating, preferably at a relative humidity of not more than 75%, as will be discussed hereinafter. However, unless such an elimination procedure is employed, a relative humidity of not more than 80% is preferably employed. The upper limit to heating temperature is preferably 100°C, more preferably 90°C.

The relative humidity for the heat treatment of gum arabic in the above case can be suitably selected generally within the range of 30-80% or 40-80%, more preferably 50-80%, still more preferably 60-80%, further more preferably 65-80%, especially preferably 70-80%. Furthermore, the temperature under the above relative humidity condition can be preferably 60-100°C, more preferably 60-90°C, for instance. By heating gum arabic under the above relative humidity and temperature conditions, the gum arabic can be modified to improve the emulsifying ability while the gum arabic is prevented from melting or adhering to each other to form masses.

The heat treatment of gum arabic can be carried through by allowing the gum arabic to stand in an atmosphere within the above-mentioned relative humidity range and temperature range during the whole treatment course, but in order to provide a constant quality for modified gum arabic, it is preferable to perform the heat treatment under well-controlled conditions, namely constant relative humidity and constant temperature conditions. For this purpose, the heat treatment of gum arabic according to the invention is preferably carried out in a closed vessel (closed system) which can be adjusted to predetermined constant relative humidity and temperature levels. The method for adjustment of relative humidity is not restricted but may be any desired method such as passing water vapor or circulating air laden with a predetermined level of moisture.

The duration of heat treatment of gum arabic varies according to the forms of gum arabic (unmodified) and the conditions of temperature or relative humidity but may usually range from several hours to scores of days. Taking the case in which a crushed or broken gum arabic with an average particle diameter of about 5 mm is used as the subject for modification and heated in an atmosphere having a relative humidity of 50-75% as an example, the heat treatment at 55-60°C for 7-14 days or at 80-90°C for 12 hours to 7 days may be mentioned.

As mentioned above, even when the heat treatment is carried out under high-temperature, high-humidity conditions such as a temperature of not less than 60°C and a relative humidity of not less than 80%, particularly as high as more than 80%, the gum arabic can be modified to have an improved emulsifying ability without adhering to each other and agglomerating by cooling the gum arabic, immediately after heating, at a relative humidity lower than the relative humidity adopted for the heating.

More specifically, the above method can be carried out by heating gum arabic (unmodified) in an atmosphere having a relative humidity of 80-100% (preferably a relative humidity over 80% up to 100%) and then cooling it in an atmosphere having a relative humidity of not more than 75%. Particularly the adhesion of gum arabic is liable to take place when the heat treatment is carried out in an atmosphere having a relative humidity of 80-100% (particularly a relative humidity over 80% up to 100%) at a temperature of not less than 60°C. Therefore, the above method is preferably carried out by heating gum arabic (unmodified) in an atmosphere having a relative humidity of 80-100% (preferably a relative humidity over 80% up to 100%) at a temperature of 60-150°C and, then, cooling it to a temperature not over room temperature in an atmosphere having a relative humidity of not more than 75%.

In the present invention, room temperature means the ordinary indoor temperature, specifically 25±5°C. Therefore, cooling to a temperature not over room temperature means cooling to 25±5°C or less, more specifically down to 1 - 25±5°C. Cooling may be carried out by force but may be carried out by allowing the load to stand in a room (under room temperature conditions).

The above-mentioned cooling in an atmosphere having a relative humidity of not more than 75% can be specifically carried out by transferring the heated gum arabic to a vessel controlled to a relative humidity of not more than 75%. As an alternative, the above cooling can be carried out after said heating performed in a closed system isolated from the outdoor atmosphere and controlled to a relative humidity range of 80-100%, by opening the closed system to admit the external atmosphere.

The gum arabic prepared by the above method of the invention has been modified so as to show an improved emulsifying ability compared with the unmodified gum arabic. Therefore, the method of the invention is specifically a method for modifying gum arabic which enhances the emulsifying ability of gum arabic and, as such, can be defined as a method for improving the emulsifying ability of gum arabic. Furthermore, the invention may further be defined as a method for producing a modified gum arabic having an improved emulsifying ability.

### (2) Use of modified gum arabic for preparing an emulsifier and method for preparing an emulsion

The modified gum arabic prepared by the above method can be clearly distinguished from the unmodified gum arabic in that the former has a remarkably higher emulsifying ability. The emulsifying ability of modified gum arabic is preferably such that, when an emulsion is prepared by using it, the average particle diameter of droplets or vesicles (dispersed phase) forming the emulsion becomes not over 1 µm, preferably not more than 0.8 µm, still more preferably not more than 0.7 µm. The reference emulsion for use in this evaluation can be prepared by the method described hereinafter in Experiment Example 1(3).

Furthermore, the emulsion prepared is preferably stable over time. This stability over time can be typically evaluated by measuring the average particle diameters of the prepared emulsion immediately after preparation [average particle diameter (a)] and after 7 days of storage at 60°C [average particle diameter (b)], respectively, and assessing the difference between the two values (b-a). Though it is not restricted, it is preferable that there be obtained an emulsion having said difference of not more than 1, preferably not more than 0.3, still more preferably not more than 0.1.

The modified gum arabic according to the invention can be used with advantage as an emulsifier in the field of food, pharmaceuticals, quasi-drugs or cosmetics, particularly for products which may be taken orally. More particularly, it can be used with advantage as an emulsifier in the emulsification of foods and beverages such as drinks, powdered drinks, desserts, chewing gums, tablet confections, snack confections, processed fish products, processed animal products, retort foods, etc., emulsification of coatings for tablets and other products, emulsification of oily flavorings, emulsification of oily colors, and other uses. While the above modified gum arabic can be used in the form of a solution as such or prepared in a granular or powdery form before use as an emulsifier, it can be optionally formulated with other excipients and/or additives for use as an emulsifier. In such cases, said excipients and additives can be suitably selected according to the kind and use of the product to be emulsified in the routine manner. For example, it can be used in admixture with a saccharide (s), such as dextrin, maltose, lactose or the like, or a polyhydric alcohol such as glycerol, propylene glycol or the like.

The present invention further provides a method for producing an emulsion using said modified gum arabic as an emulsifier. This emulsion can be prepared by dispersing and stabilizing a hydrophobic substance as a dispersoid in a hydrophilic solvent with the aid of said modified gum arabic as an emulsifier. The emulsion in the present context means an oil-in-water (O/W) emulsion or a W/O/W emulsion, for instance.

The hydrophobic substance to be emulsified as above is not particularly restricted insofar as it is a substance which is usually put to use in the form of an emulsion or must be processed into an emulsion but is preferably a hydrophobic substance which is used in the field of food, pharmaceuticals, quasi drugs or fragrances and cosmetics, more preferably an (edible) hydrophobic substance which can be ingested or taken by mouth.

Specifically, there can be mentioned a variety of essential oils available from source plants, for example citrus varieties such as orange, lime, lemon, grapefruit, etc., oleoresins obtainable from source plants such as pepper, cinnamon, ginger, etc. by the oleoresin process, absolutes obtainable from certain source plants such as jasmine, rose, etc. by the absolute process, synthetic flavorants and oily flavorings such as oily prepared spices etc.; oily colors such as β-carotene, paprika color, lycopene, palm oil carotene, Donaliella carotene, carrot carotene, etc.; oil-soluble vitamins such as vitamin A, D, E and K; polybasic unsaturated fatty acids such as docosahexaenoic acid, eicosapentaenoic acid, ?-linolenic acid, etc.; animal and vegetable oils such as soybean oil, rapeseed oil, corn oil and fish oil; SAIB (sucrose acetate isobutyrate), food processing oils such as C₆-C₁₂ medium-chain triglycerides, and optional mixtures of such edible oily materials.

The above-mentioned method for producing an emulsion with the aid of said modified gum arabic is not particularly restricted but may comprise mixing a hydrophobic substance and a hydrophilic substance in the presence of said modified gum arabic by mechanical agitation using a homogenizer or a high-pressure ejection technique in the manner well established in the art of preparing oil-in-water (O/W) emulsions or W/O/W emulsions. More particularly, the following protocol can be mentioned as an example.

First, the modified gum arabic is dissolved in a hydrophilic solvent, such as water, and optionally freed of contaminants by a suitable solid-liquid separation means such as centrifugation or filtration with a filter press or the like to give an aqueous gum arabic solution. By using a stirrer, for instance, the objective hydrophobic substance (for example, an oil or fat or a mixture obtained by dissolving a flavoring or a color in such an oil or fat), is admixed into the solution for preliminary emulsification. In this operation, the specific gravity may be optionally adjusted with a specific gravity control agent such as SAIB. The preliminary emulsion thus obtained is then emulsified by using an emulsification machine.

While the hydrophobic substance includes the substances mentioned hereinbefore, when an emulsified flavoring or an emulsified color is to be prepared by using an oily flavoring or an oily color, it is preferable to use a mixture prepared by dissolving the oily flavoring or color in an oil or fat beforehand as said hydrophobic substance. By doing so, the emulsification can be effected more stably and the evaporation of the ingredient can be prevented. The oils and fats in which such an oily flavoring or color is to be dissolved are not particularly restricted but usually a medium-chain triglyceride (C₆₋₁₂ fatty acid triglycerides) and a vegetable oil such as corn oil, sufflower oil or soybean oil can be employed.

The emulsifying machine for use in said emulsification is not particularly restricted, either, but can be suitably selected according to the particle size of the objective emulsion and the viscosity of the material. For example, not only mechanical-high-pressure homogenizers but also emulsifying machines such as Disper Mill, colloid mills, etc. can be employed.

As mentioned above, the emulsification is carried out by adding a hydrophobic substance to a hydrophilic solvent under stirring, driving an impeller for preliminary emulsification to prepare an emulsion with a particle diameter of 2-5 µm, and finally treating it with an emulsifying machine such as a homogenizer to give an emulsion of fine and uniform particles (for example, not greater than 1 µm in average particle diameter).

Many of the colors such as β-carotene occur as suspensions of crystals. Therefore, in order to process such colors into emulsions (emulsified colors), it is recommendable to dissolve and mix such crystals into a suitable oil or fat at an high temperature and add the resulting solution to a hydrophilic solvent.

Compared with the emulsion prepared using the ordinary (untreated) gum arabic, the emulsion thus prepared using the modified gum arabic has uniform particle diameter and shows high stability against abuses (severe conditions) such as heating, long-term storage, change over time, etc., not exhibiting the degradation of the particles from agglomerating, adhering, etc.

### EXAMPLES

The following experiment examples and working examples illustrate the present invention in detail. They are, however, by no means limitative of the scope of the present invention. It should also be understood that, in the following experiment examples, all 'parts' are 'parts by weight' and % figures represent 'weight %' unless otherwise indicated. As the gum arabic (subjected for modification), used was the roughly crushed solid which was obtained by drying and crushing gummy exudate collected from the trunks and branches of Acacia senegal in Sudan (an average fragment diameter = about 5 mm, water content 7%, average molecular weight 200,000) (in the following experiment examples, it is referred to as gum arabic (unmodified) or unmodified gum arabic).

In each formulation, * means the product of San-Ei Gen F.F.I. Inc.

### Experiment Example 1

### <Modified gum arabic: Preparation Examples 1-3, 1-6 and 1-10, and Comparative Preparation Examples 1-1, 1-2, 1-4, 1-5 and 1-7 to 1-9

As indicated in Table 1, 1 kg portions of gum arabic (unmodified) were respectively placed and allowed to stand in a hermetically sealed constant-humidity vessel adjusted to a relative humidity of 30% at the temperature of 40°C, 50°C or 60°C for 7 days and, then, cooled to room temperature (25°C) in the same humidity environment to give modified gum arabic samples (Comparative Preparation Examples 1-1 and 1-2, and Preparation Example 1-3). Similarly, as shown in Table 1, 1 kg portions of gum arabic (unmodified) were allowed to stand under relative humidity conditions of 50% and 70%, respectively, at the temperature of 40°C, 50°C or 60 for 7 days and, then, cooled to room temperature (25°C) to give modified gum arabic samples (Comparative Preparation Examples 1-4 and 1-5, and Preparation Example 1-6; as well as Comparative Preparation Examples 1-7 to 1-9, and Preparation Example 1- 10).

Of the modified gum arabic samples obtained by the above method (Preparation Examples 1-3, 1-6 and 1-10, and Comparative Preparation Examples 1-1, 1-2, 1-4, 1-5 and 1-7 to 1-9), the changes in appearance and the average molecular weights were investigated. Furthermore, each of these modified gum arabic samples was used to prepare an emulsion and the average particle diameter and the over-time stability of the emulsion were investigated and the emulsifying characteristics of each emulsion ware evaluated.

### (1) Change in appearance

The appearance of the modified gum arabic samples obtained as above (Preparation Examples 1-3, 1-6 and 1-10, and Comparative Preparation Examples 1-1, 1-2, 1-4, 1-5 and 1-7 to 1-9) were compared by naked eyes with the unmodified gum arabic (a crushed matter with an average particle diameter of about 5 mm) and observed for agglomeration of particles (mass formation) and dehydration.

### (2) Average molecular weight

Each of the modified gum arabic samples (Preparation Examples 1-3, 1-6 and 1-10, and Comparative Preparation Examples 1-1, 1-2, 1-4, 1-5 and 1-7 to 1-9) was dissolved in deionized water, filtered, and subjected to gel permeation column chromatography (Shodex Ohpak B-G column; product of Showa Denko) to determine its average molecular weight.

### (3) Evaluation of emulsifying ability

One (1) kilogram portions of the modified gum arabic (Preparation Examples 1-3, 1-6 and 1-10, and Comparative Preparation Examples 1-1, 1-2, 1-4, 1-5 and 1-7 to 1-9) were respectively dissolved in 4 kg of water, centrifuged to remove insolubles, and prepared into 20 weight % aqueous gum arabic solutions. To each of these 20 weigh % aqueous gum arabic solutions was added 150 g of medium-chain triglyceride (octanoic/decanoic acid triglyceride O.D.O^{™} (product of the Nisshin Oil Mills)) under agitation, and the mixture was emulsified using a homogenizer (manufactured by APV Gaulin) (homogenized 4 times at a pressure of 4.4 MPa (450 kg/cm²)).

Of the resulting emulsion, the average particle diameter was measured immediately after emulsification and after 7 days of storage at 60°C using a particle size distribution analyzer SALD-1100 (a laser detraction system, manufactured by Shimadzu Corporation).

Meanwhile, the emulsifying ability of an emulsifier is generally evaluated as follows. The smaller the average particle diameter of the emulsion obtained is and the longer sustained stably the particle diameter of the emulsion is, the higher the emulsifying ability is [Turbidometric Study of O/W Emulsions as Emulsified with Gum Arabic, Journal of the Pharmaceutical Society of Japan, 112 (12), 906-913 (1992)]. Moreover, generally the emulsifying ability of gum arabic is considered well-sustained and rated high when the molecular weight of the gum arabic is higher ["Influence of the Molecular Weight of Gum Arabic on the Stability of Emulsions", Science of Pharmaceuticals, 42(1), 25-29 (1982)].

The results of studies on (1) the change in appearance and (2) the average molecular weight of the modified gum arabic samples obtained in Preparation Examples 1-3, 1-6 and 1-10, and Comparative Preparation Examples 1-1, 1-2, 1-4, 1-5 and 1-7 to 1-9 are presented in Table 1. The results of studies on (3) the average particle diameter and the over-time stability of emulsions prepared with the above modified gum arabic samples are presented in Table 2.

**<Table 1>**

| Sample | Heating conditions | | Average molecular weight | Change in appearance |
|---|---|---|---|---|
| | Relative humidity, time | Temperature | | |
| Gum Arabic (unmodofied) | - | - | 20x10⁴ | - |
| Comparative Preparation Example 1 | 30%, 7 days | 40°C | 29x10⁴ | Unchangedintermsof agglomeration or dehydration |
| Comparative Preparation Example 2 | 30%, 7 days | 50°C | 35x10⁴ | Unchanged in terms of agglomeration or dehydration |
| Preparation Example 3 | 30%, 7 days | 60°C | 46x10⁴ | Unchanged in terms of agglomeration or dehydration |
| Comparative Preparation Example 4 | 50%, 7 days | 40°C | 31x10⁴ | Unchanged in terms of agglomeration or dehydration |
| Comparative Preparation Example 5 | 50%, 7 days | 50°C | 38x10⁴ | Unchanged in terms of agglomeration or dehydration |
| Preparation Example 6 | 50%, 7 days | 60°C | 50x10⁴ | Unchanged in terms of agglomeration or dehydration |
| Comparative Preparation Example 7 | 70%, 7 days | 20°C | 20x10⁴ | Unchanged in terms of agglomeration or dehydration |
| Comparative Preparation Example 8 | 70%, 7 days | 40°C | 33x10⁴ | Partial agglomeration |
| Comparative Preparation Example 9 | 70%, 7 days | 50°C | 40x10⁴ | Unchanged in terms of agglomeration or dehydration |
| Preparation Example 10 | 70%, 7 days | 60°C | 53x10⁴ | Unchanged in terms of agglomeration or dehydration |

The above results indicate that when gum arabic (unmodified) is heated under a given relative humidity condition, the average molecular weight of the modified gum arabic is increased temperature-dependently, i.e. as the temperature is increased. It was also found that when gum arabic (unmodified) is heated under a given temperature condition, the average molecular weight of the modified gum arabic is increased humidity-dependently, i.e. as the relative humidity is increased. Regarding the change in appearance, the heat treatment under 30-70% relative humidity within the temperature range of 20-60°C caused no change at all. Lastly, in the case of standing at 20°C (relative humidity 70%), there was no modification of gum arabic.

**<Table 2>**

| Gum arabic used for preparation of an emulsion | Heating conditions | | Average particle diameter of emulsion (µm) | | Stability (b-a) |
|---|---|---|---|---|---|
| | Relative humidity, time | Temper ature | Immediately after preparation (a) | After 7 days at 60°C (b) | |
| Gum Arabic (unmodofied) | - | - | 1.20 | 8.85 | 7.65 |
| Comparative Preparation Example 1 | 30%, 7 days | 40°C | 0.85 | 1.79 | 0.94 |
| Comparative Preparation Example 2 | 30% , 7 days | 50°C | 0.75 | 0.98 | 0.23 |
| Preparation Example 3 | 30%, 7 days | 60°C | 0.68 | 0.78 | 0.10 |
| Comparative Preparation Example 4 | 50%, 7 days | 40°C | 0.85 | 1.58 | 0.73 |
| Comparative Preparation Example 5 | 50%, 7 days | 50°C | 0.72 | 0.88 | 0.16 |
| Preparation Example 6 | 50%, 7 days | 60°C | 0.65 | 0.69 | 0.04 |
| Comparative Preparation Example 7 | 70%, 7 days | 20°C | 1.16 | 5.54 | 4.38 |
| Comparative Preparation Example 8 | 70%, 7 days | 40°C | 0.82 | 1.40 | 0.58 |
| Comparative Preparation Example 9 | 70%, 7 days | 50°C | 0.71 | 0.86 | 0.15 |
| Preparation Example 10 | 70%, 7 days | 60°C | 0.63 | 0.65 | 0.02 |

The above findings on emulsifying characteristics of the emulsion prepared with each of the modified gum arabic samples (Preparation Examples 1-3, 1-6 and 1-10, and Comparative Preparation Examples 1-1, 1-2, 1-4, 1-5 and 1-7 to 1-9) indicate that as the relative humidity used for heat-treatment of gum arabic rose from 30% to 70%, the average particle diameter of the product emulsion was decreased humidity-dependently and, at the same time, the over-time stability of the particle diameter is increased. Furthermore, as the temperature for heat treatment of gum arabic was increased from 40°C to 60°C, the average particle diameter was decreased temperature-dependently and, at the same time, the over-time stability of the particle diameter is improved. Thus, it was found that within the range of 30-70% relative humidity and 40-60°C, a modified gum arabic having an improved emulsifying ability as well as an improved emulsion stability can be obtained by the treatment under relatively higher temperature and higher relative humidity conditions.

It was also clear from the above results that heating at a temperature of 60°C or higher is recommendable for enhancing the emulsifying ability (modification) of gum arabic.

### Experiment Example 2

### <Modified gum arabic: Preparation Examples 11-15>

As shown in Table 3, 1 kg portions of gum arabic (unmodified) were respectively placed and maintained in a hermetically sealed constant-humidity vessel controlled to a relatively humidity of 70% at various temperature within 60-105°C for 12 hours (Preparation Examples 11-15) and, then, cooled to room temperature (25°C) under the same humidity condition to prepare modified gum arabic samples.

Of the modified gum arabic samples (Preparation Examples 11-15) obtained by the above method, (1) the change in appearance and (2) the average molecular weight were investigated in the same manner as in Experiment Example 1. Furthermore, emulsions were prepared by using the modified gum arabic samples (Preparation Examples 11-15) in the same manner as in Experiment Example 1 and (3) the average particle diameter and the over-time stability of each emulsion were investigated in the same manner as in Experiment Example 1 to evaluate the emulsifying ability of each modified gum arabic.

The findings on (1) the change in appearance and (2) the average molecular weight of the modified gum arabic samples obtained in Preparation Examples 11-15 are presented in Table 3. The findings on (3) the average particle diameter and the over-time stability of the emulsion prepared using each of the above modified gum arabic samples are presented in Table 4.

**<Table 3>**

| Sample | Heating conditions | | Average molecular weight | Change in appearance |
|---|---|---|---|---|
| | Relative humidity | Temperature, time | | |
| Gum Arabic (unmodofied) | - | - | 20x10⁴ | - |
| Preparation Example 11 | 70% | 60°C, 12 hours | 31x10⁴ | Unchanged in terms of agglomeration or dehydration |
| Preparation Example 12 | 70% | 70°C, 12 hours | 35x10⁴ | Unchanged in terms of agglomeration or dehydration |
| Preparation Example 13 | 70% | 90°C, 12 hours | 48x10⁴ | Unchanged in terms of agglomeration or dehydration |
| Preparation Example 14 | 70% | 100°C, 12 hours | 52x10⁴ | Slight agglomeration was noted |
| Preparation Example 15 | 70% | 105°C, 12 hours | 54x10⁴ | Agglomeration was noted |

It was clear from the above results that, just as in Experiment Example 1, when gum arabic (unmodified) is modified at a relative humidity of 70%, the average molecular weight of the modified gum arabic is increased temperature-dependently as the heating temperature rose from 60°C to 105°C. Regarding the change in appearance, there was no change at all when the relative humidity was 70% and the temperature was not over 90°C but when the heat treatment was carried out at a relative humidity of 70% and a temperature of not less than 100°C, particularly at 105°C, the trouble of agglomeration took place.

**<Table 4>**

| Gum arabic used for preparation of an emulsion | Heating conditions | | Average particle diameter of emulsion (µm) | | Stabil ity (b-a) |
|---|---|---|---|---|---|
| | Relative humidity | Temperature, time | Immediat ely after preparat ion (a) | After 7 days at 60°C (b) | |
| Gum Arabic (unmodofied) | - | - | 1.20 | 8.85 | 7.65 |
| Preparation Example 11 | 70 % | 60°C,12 hours | 0.83 | 1.58 | 0.75 |
| Preparation Example 12 | 70% | 70°C,12 hours | 0.73 | 0.93 | 0.20 |
| Preparation Example 13 | 70% | 90°C,12 hours | 0.65 | 0.70 | 0.05 |
| Preparation Example 14 | 70% | 100°C,12 hours | 0.64 | 0.66 | 0.02 |
| Preparation Example 15 | 70% | 105°C,12 hours | 0.63 | 0.64 | 0.01 |

The above findings on emulsifying characteristics of the emulsions prepared with the modified gum arabic samples (Preparation Examples 11-15) indicate that under the relative humidity condition of 70%, increasing the temperature for heat treatment of gum arabic from 60°C to 105°C resulted in a decrease in average particle diameter of the product emulsion and an improvement in the over-time stability of the particle diameter. This result indicates that as the temperature for modification of gum arabic is increased from 60°C to 105°C under 70% relative humidity, the emulsifying ability of the modified gum arabic is increased temperature-dependently. Moreover, it can be understood by comparison of the above Preparation Examples 11-15 with the Comparative Preparation Examples 1-8 and 1-9, and the Preparation Example 1-10 shown in Experiment Example 1 that even at a low temperature, a modification effect comparable to that of a high-temperature treatment can be obtained by prolonging the duration of treatment, that under the same conditions (relative humidity and temperature), prolonging the duration of heat treatment leads to a duration-dependent increase in the emulsifying ability of the modified gum arabic, and that the disadvantages in terms of appearance, workability, and handling which are encountered in high-temperature treatments (Preparation Examples 14 and 15) can be avoided by prolonged heating at low temperature (Preparation Example 1-10).

It was also found from the above results that under the relative humidity condition of 70%, the heat treatment at a temperature not over 100°C, preferably at a temperature of not more than 90°C is preferred from workability and handling points of view.

### Experiment Example 3

### <Modified gum arabic: Preparation Examples 16-18>

As shown in Table 5, 1 kg portions of gum arabic (unmodified) were respectively placed and maintained in a hermetically sealed constant-humidity vessel controlled to a relative humidity of 60% at 40-80°C for 7 days and, then, cooled to 25°C under the same humidity condition to give modified gum arabic samples (Comparative Preparation Example 16, and Preparation Examples 17 and 18).

Of the modified gum arabic samples (Preparation Examples 16-18) obtained by the above method, (1) the change in appearance and (2) the average molecular weight were investigated in the same manner as in Experiment Example 1. Furthermore, emulsions were prepared by using the modified gum arabic samples (Comparative Preparation Example 16, and Preparation Examples 17 and 18) in the same manner as in Experiment Example 1 and (3) the average particle diameter and the over-time stability of each emulsion were investigated in the same manner as in Experiment Example 1 to evaluate the emulsifying ability of each modified gum arabic.

The findings on (1) the change in appearance and (2) the average molecular weight of the modified gum arabic samples obtained in Comparative Preparation Example 16, and Preparation Examples 17 and 18 are presented in Table 5. The findings on (3) the average particle diameter and the over-time stability of the emulsion prepared using each of the above modified gum arabic samples are presented in Table 6.

**<Table 5>**

| Sample | Heating conditions | | Average molecular weight | Change in appearance |
|---|---|---|---|---|
| | Relative humidity | Temperature, time | | |
| Gum Arabic (unmodofied) | - | - | 20x10⁴ | - |
| Comparative Preparation Example 16 | 60% | 40°C. 7 days | 32x10⁴ | Unchanged in terms of agglomeration or dehydration |
| Preparation Example 17 | 60% | 60°C, 7 days | 52x10⁴ | Unchanged in terms of agglomeration or dehydration |
| Preparation Example 18 | 60% | 80°C, 7 days | 60x10⁴ | Unchanged in terms of agglomeration or dehydration |

The above results indicate that when gum Arabic (unmodified) is modified under the relative humidity condition of 60%, increasing the temperature condition from 40°C to 80°C resulted in a temperature-dependent increase in the average molecular weight of the modified gum arabic. Moreover, in the heat treatment at a relative humidity of 60% and a temperature of 80°C, no agglomeration of gum arabic was found even in 7 days of treatment.

**<Table 6>**

| Gum arabic used for preparation of an emulsion | Heating conditions | | Average particle diameter of emulsion (µm) | | Stability (b-a) |
|---|---|---|---|---|---|
| | Relative humidity | Temperature time | immediately after preparation (a) | After 7 days at 60°C (b) | |
| Gum Arabic (unmodofied) | - | - | 1.20 | 8.85 | 7.65 |
| Comparative Preparation Example 16 | 60% | 40°C, 7 days | 0.84 | 1.52 | 0.68 |
| Preparation Example 17 | 60% | 60°C, 7 days | 0.64 | 0.67 | 0.03 |
| Preparation Example 18 | 60% | 80°C, 7 days | 0.61 | 0.61 | 0.00 |

The above findings on emulsifying characteristics of the emulsions prepared with the modified gum arabic samples (Comparative Preparation Example 16, and Preparation Examples 17 and 18) indicate that when gum arabic is modified under the relative humidity condition of 60%, increasing the temperature condition from 40°C to 80°C resulted in a decrease in average particle diameter of modified gum arabic (product emulsion) and an improvement in the over-time stability of the particle diameter.

This result indicates that as the temperature for modification of gum arabic is increased from 40°C to 80°C under 60% relative humidity, the emulsifying ability of the modified gum arabic is increased temperature-dependently.

### Experiment Example 4

### <Modified gum arabic: Preparation Examples 19-27>

As shown in Table 7, 1 kg portions of gum arabic (unmodified) were respectively placed and maintained in a hermetically sealed constant-humidity vessel controlled to a relative humidity of 10-90% at a temperature of 90°C for 12 hours and, then, cooled to room temperature (25°C) under the same humidity condition to give modified gum arabic samples (Preparation Examples 19-27).

Of the modified gum arabic samples (Preparation Examples 19-27) obtained by the above method, (1) the change in appearance and (2) the average molecular weight were investigated in the same manner as in Experiment Example 1. Furthermore, emulsions were prepared by using the modified gum arabic samples (Preparation Examples 19-27) in the same manner as in Experiment Example 1 and (3) the average particle diameter and the over-time stability of each emulsion were investigated in the same manner as in Experiment Example 1 to evaluate the emulsifying ability of each modified gum arabic.

The findings on (1) the change in appearance and (2) the average molecular weight of the modified gum arabic samples obtained in Preparation Examples 19-27 are presented in Table 7. The findings on (3) the average particle diameter and the over-time stability of the emulsion prepared using each of the above modified gum arabic samples are presented in Table 8.

**<Table 7>**

| Sample | Heating conditions | | Average molecular weight | Change in appearance |
|---|---|---|---|---|
| | Relative humidity | Temperature, time | | |
| Gum Arabic (unmodofied) | - | - | 20x10⁴ | - |
| Preparation Example 19 | 10% | 90°C,12 hours | 23x10⁴ | Fairly dehydrated on surface |
| Preparation Example 20 | 20% | 90°C,12 hours | 29x10⁴ | Dehydrated on surface |
| Preparation Example 21 | 30% | 90°C, 12 hours | 32x10⁴ | Unchanged in terms of agglomeration or dehydration |
| Preparation Example 22 | 40% | 90°C,12 hours | 35x10⁴ | Unchanged in terms of agglomeration or dehydration |
| Preparation Example 23 | 50% | 90°C,12 hours | 42x10⁴ | Unchanged in terms of agglomeration or dehydration |
| Preparation Example 24 | 60% | 90°C,12 hours | 46x10⁴ | Unchanged in terms of agglomeration or dehydration |
| Preparation Example 25 | 70% | 90°C,12 hours | 48x10⁴ | Unchanged in terms of agglomeration or dehydration |
| Preparation Example 26 | 80% | 90°C,12 hours | 51x10⁴ | Partial agglomeration |
| Preparation Example 27 | 90% | 90°C,12 hours | 52x10⁴ | Agglomeration with formation of large syrupy masses |

The above results indicate that when gum arabic (unmodified) is modified under the temperature condition of 90°C, increasing the relative humidity condition from 10% to 90% resulted in a humidity-dependent increase in the average molecular weight of the modified gum arabic. Regarding the change in appearance, no change was observed under the relative humidity condition of 30-70%. However, the trouble of progressive surface dehydration occurred under the relative humidity condition of 10-20% and the trouble of agglomeration to form syrupy masses was encountered due to excessive moisture under the relative humidity condition of 80-90%, particularly 90%.

**<Table 8>**

| Gum arabic used for preparation of an emulsion | Heating conditions | | Average particle diameter of emulsion (µm) | | Stability (b-a) |
|---|---|---|---|---|---|
| | Relative humidity | Temperature, time | Immediately after preparation (a) | After 7 days at 60°C (b) | |
| Gum Arabic (unmodofied) | - | - | 1.20 | 8.85 | 7.65 |
| Preparation Example 19 | 10% | 90°C, 12 hours | 1.08 | 4.38 | 3.30 |
| Preparation Example 20 | 20% | 90°C, 12 hours | 0.88 | 1.95 | 1.07 |
| Preparation Example 21 | 30% | 90°C, 12 hours | 0.79 | 1.25 | 0.46 |
| Preparation Example 22 | 40% | 90°C, 12 hours | 0.74 | 0.95 | 0.21 |
| Preparation Example 23 | 50% | 90°C, 12 hours | 0.69 | 0.81 | 0.12 |
| Preparation Example 24 | 60% | 90°C, 12 hours | 0.66 | 0.75 | 0.09 |
| Preparation Example 25 | 70% | 90°C, 12 hours | 0.65 | 0.70 | 0.05 |
| Preparation Example 26 | 80% | 90°C, 12 hours | 0.65 | 0.68 | 0.03 |
| Preparation Example 27 | 90% | 90°C, 12 hours | 0.62 | 0.63 | 0.01 |

The above findings on emulsifying characteristics of the emulsions prepared with the modified gum arabic samples (Preparation Examples 19-27) indicate that increasing the relative humidity condition for the heating of gum arabic from 10% to 90% resulted in a decrease in average particle diameter of the product emulsion and an improvement in the over-time stability of the particle diameter. This result indicates that as the relative humidity for modification of gum arabic is increased from 10% to 90%, the emulsifying ability of the modified gum arabic is increased humidity-dependently.

These results indicate that in order to enhance the emulsifying ability (modification) of gum arabic, the heat treatment is preferably carried out under a relative humidity condition of not less than 20%, preferably not less than 30%, and that from the workability and handling points of view, the heat treatment is preferably carried out under a relative humidity condition of not more than 80%, preferably not more than 70%.

### Experiment Example 5

### <Modified gum arabic: Preparation Examples 28-30>

As shown in Table 9, 1 kg portions of gum arabic (unmodified) were respectively placed and maintained in a hermetically sealed constant-humidity vessel controlled to a relative humidity of 30%, 50% or 70% at a temperature of 150°C for 12 hours and, then, cooled to room temperature (25°C) under the same humidity condition to give modified gum arabic samples (Preparation Examples 28-30).

Of the modified gum arabic samples (Preparation Examples 28-30) obtained by the above method, (1) the change in appearance and (2) the average molecular weight were investigated in the same manner as in Experiment Example 1. Furthermore, emulsions were prepared by using the modified gum arabic samples (Preparation Examples 28-30) in the same manner as in Experiment Example 1 and (3) the average particle diameter and the over-time stability of each emulsion were investigated in the same manner as in Experiment Example 1 to evaluate the emulsifying ability of each modified gum arabic.

The findings on (1) the change in appearance and (2) the average molecular weight for each of the modified gum arabic samples obtained in Preparation Examples 28-30 are presented in Table 9. The findings on (3) the average particle diameter and the over-time stability of the emulsion prepared using each of the above modified gum arabic samples are presented in Table 10.

**<Table 9>**

| Sample | Heating conditions | | Average molecular weight | Change in appearance |
|---|---|---|---|---|
| | Relative humidity | Temperature, time | | |
| Gum Arabic (unmodofied) | - | - | 20x10⁴ | - |
| Preparation Example 28 | 30% | 150°C, 12 hours | 53x10⁴ | Slight dehydration but no agglomeration observed |
| Preparation Example 29 | 50% | 150°C, 12 hours | 56x10⁴ | Unchanged in terms of agglomeration or dehydration |
| Preparation Example 30 | 70% | 150°C, 12 hours | 59x10⁴ | Agglomeration but no dehydration observed |

Even the heat treatment of gum arabic at a temperature of 150°C for 12 hours caused no remarkable influence on dehydration or agglomeration when the relative humidity was 30-70%.

**<Table 10>**

| Gum arabic used for preparation of an emulsion | Heating conditions | | Average particle diameter of emulsion (µm) | | Stability (b-a) |
|---|---|---|---|---|---|
| | Relative humidity | Temperature, time | Immediately after preparation (a) | After 7 days at 60°C (b) | |
| Gum Arabic (unmodofied) | - | - | 1.20 | 8.85 | 7.65 |
| Preparation Example 28 | 30% | 150°C, 12 hours | 0.64 | 0.70 | 0.06 |
| Preparation Example 29 | 50% | 150°C, 12 hours | 0.63 | 0.68 | 0.05 |
| Preparation Example 30 | 70% | 150°C, 12 hours | 0.63 | 0.66 | 0.03 |

The above findings regarding the emulsifying characteristics of emulsions prepared with the modified gum arabic samples (Preparation Examples 28-30) indicate that in the heat treatment of gum arabic at a temperature of as high as 150°C, the average particle diameters of all the emulsions obtained were small and the over-time stability of particle diameter was high, regardless of the humidity condition within the range of 30-70%. This result indicates that when the temperature used for the modification of gum arabic is as high as 150°C, there can be obtained a modified gum arabic having a high emulsifying ability regardless of relative humidity (30-70%). It was also found that under the conditions of 150°C and 70% relative humidity, neither a change in appearance nor a workability or handling problem is encountered.

### Experiment Example 6

### <Modified gum arabic: Preparation Examples 31-34>

As shown in Table 11, 1 kg portions of gum arabic (unmodified) were respectively placed and maintained in a hermetically sealed constant-humidity vessel controlled to a relative humidity of 60%, 70%, 80% or 90% at a temperature of 60°C for 7 days and, then, cooled to room temperature (25°C) under the same humidity condition to give modified gum arabic samples (Preparation Examples 31-34).

Of the modified gum arabic samples (Preparation Examples 31-34) obtained by the above method, (1) the change in appearance and (2) the average molecular weight were investigated in the same manner as in Experiment Example 1. Furthermore, emulsions were prepared by using the modified gum arabic samples (Preparation Examples 31-34) in the same manner as in Experiment Example 1 and (3) the average particle diameter and the over-time stability of each emulsion were investigated in the same manner as in Experiment Example 1 to evaluate the emulsifying ability of each modified gum arabic.

The findings on (1) the change in appearance and (2) average molecular weight of the modified gum arabic samples obtained in Preparation Examples 31-34 are presented in Table 11. The findings on (3) the average particle diameter and the over-time stability of the emulsion prepared using each of the above modified gum arabic samples are presented in Table 12.

**<Table 11>**

| Sample | Heating conditions | | Average molecular weight | Change in appearance |
|---|---|---|---|---|
| | Relative humidity | Temperature, time | | |
| Gum Arabic (unmodofied) | - | - | 20x10⁴ | - |
| Preparation Example 31 | 60% | 60°C, 7 days | 52x10⁴ | Unchanged in terms of agglomeration or dehydration |
| Preparation Example 32 | 70% | 60°C, 7 days | 53x10⁴ | Unchanged in terms of agglomeration or dehydration |
| Preparation Example 33 | 80% | 60°C, 7 days | 52x10⁴ | Slight agglomeration observed |
| Preparation Example 34 | 90% | 60°C, 7 days | 54x10⁴ | Agglomeration observed |

Even the 7-day-long heat treatment under the conditions of 60°C and up to 70% relative humidity caused neither dehydration nor agglomeration at all. Moreover, under the conditions of 60°C and 80% relative humidity, slight agglomeration was observed but no remarkable trouble was encountered. On the other hand, the treatment under the conditions of 60°C and 90% relative humidity caused the trouble of agglomeration and mass formation due to excessive humidity.

**<Table 12>**

| Gum arabic used for preparation of an emulsion | Heating conditions | | Average particle diameter of emulsion (µm) | | Stability (b-a) |
|---|---|---|---|---|---|
| | Relative humidity | Temperature, time | Immediately after preparation (a) | After 7 days at 60°C (b) | |
| Gum Arabic (unmodofied) | - | - | 1.20 | 8.85 | 7.65 |
| Preparation Example 31 | 60% | 60°C, 7 days | 0.64 | 0.67 | 0.03 |
| Preparation Example 32 | 70% | 60°C, 7 days | 0.63 | 0.65 | 0.02 |
| Preparation Example 33 | 80% | 60°C, 7 days | 0.63 | 0.64 | 0.01 |
| Preparation Example 34 | 90% | 60°C, 7 days | 0.63 | 0.64 | 0.01 |

The above findings concerning the emulsifying characteristics of emulsions prepared with the modified gum arabic samples (Preparation Examples 31-34) indicate that a modified gum arabic having a high emulsifying ability can be obtained with little workability or handling trouble under the treating conditions of 60°C and not more than 80% relative humidity. It was also found that the heat treatment under the conditions of 60°C and 80% relative humidity is sufficient to achieve an enhancement in the emulsifying ability and that the heat treatment under the conditions of a higher relative humidity contributes little to an enhanced emulsifying ability.

### Experiment Example 7

### <Modified gum arabic: Preparation Examples 35-37>

As shown in Table 13, 1 kg portions of gum arabic (unmodified) were respectively placed in a hermetically sealed constant-humidity vessel controlled to a relative humidity of 90% and held at 90°C for 12 hours. Then, the gum was transferred to a hermetically sealed constant-humidity vessel controlled to a relative humidity of 50-90% and cooled under the same humidity condition down to room temperature (25°C) to give modified gum arabic samples (Preparation Examples 35-37).

Of the modified gum arabic samples (Preparation Examples 35-37) acquired as above, (1) the change in appearance and (2) the average molecular weight were investigated in the same manner as in Experimental Example 1. Furthermore, emulsions were prepared by using these modified gum arabic samples (Preparation Examples 35-37) in the same manner as in Experiment Example 1 and (3) the average particle diameter and the over-time stability of the emulsions were studied as in Experiment Example 1 to evaluate the emulsifying ability of each modified gum arabic.

The findings on (1) the change in appearance and (2) the average molecular weight of the modified gum arabic samples obtained in Preparation Examples 35-37 are presented in Table 13. The findings on (3) the average particle diameter and the over-time stability of emulsions prepared by using the above modified gum arabic samples are presented in Table 14.

**<Table 13>**

| Sample | Heating conditions | | Cooling conditions | | Average molecular weight | Change in appearance |
|---|---|---|---|---|---|---|
| | Temperature | Relative humidity | Temperature | Relative humidity | | |
| Gum Arabic (unmodofied) | - | - | - | - | 20x10⁴ | - |
| Preparation Example 35 | 90°C | 90% | 25°C | 50% | 52x10⁴ | Unchanged in terms of agglomeration or dehydration |
| Preparation Example 36 | 90°C | 90% | 25°C | 75% | 52x10⁴ | Slightly agglomerated |
| Preparation Example 37 | 90°C | 90% | 25°C | 90% | 52x10⁴ | Agglomeration with formation of large syrupy masses |

As can be seen from Preparation Example 27 in Experiment Example 4 and the above Preparation Example 37, when gum arabic (unmodified) is treated under the high-temperature, high-humidity conditions of 90°C and 90% relative humidity and cooled under the same humidity condition, the resulting gum arabic has a good emulsifying ability but presented with the difficulty in handling because of the agglomeration forming large syrupy masses.

The results of this Experiment Example 7 revealed that the above problems occurring in the heat treatment of gum arabic under the relative humidity condition of 90% or higher can be eliminated by cooling the heated gum under the condition of not more than 75% relative humidity, preferably not more than 50% relative humidity.

**<Table 14>**

| Gum arabic used for preparation of an emulsion | Heating conditions (90°C) | Cooling conditions (25°C) | Average particle diameter of emulsion (µm) | | Stability (b-a) |
|---|---|---|---|---|---|
| | Relative humidity | Relative humidity | Immediately after preparation (a) | After 7 days at 60°C (b) | |
| Gum arabic (unmodofied) | - | - | 1.20 | 8.85 | 7.65 |
| Preparation Example 35 | 90% | 50% | 0.63 | 0.64 | 0.01 |
| Preparation Example 36 | 90% | 75% | 0.63 | 0.64 | 0.01 |
| Preparation Example 37 | 90% | 90% | 0.63 | 0.64 | 0.01 |

Moreover, it is apparent from the results in Table 14 that the emulsifying characteristics of an emulsion depend on the heating condition adopted during the preparation of the modified gum arabic and are indifferent to the cooling condition used.

It can be concluded that while gum arabic can be efficiently modified to have an improved emulsifying ability by subjecting it to a heat treatment under high-temperature, high-humidity conditions, the trouble of agglomeration and consequent difficulty in use as an emulsifier is inevitable but this drawback in appearance terms can be overcome without being affecting the emulsifying ability by cooling the thus-heated gum in a low humidity environment.

### Experiment Example 8

### <Modified gum arabic: Preparation Examples 38-39>

As shown in Table 15, 1 kg portions of gum arabic (unmodified) were respectively placed in a hermetically sealed constant-humidity vessel controlled to a relative humidity of 80% and held at 60°C for 7 days. Then, the gum was transferred to a hermetically sealed constant-humidity vessel controlled to a relative humidity of 75% and cooled under the same humidity condition down to room temperature (25°C) to give modified gum arabic samples (Preparation Example 38). As a comparison, a modified gum arabic sample was prepared by maintaining gum arabic at 60°C and 80% relative humidity for 7 days and then cooling it to room temperature (25°C) under the same humidity condition (Preparation Example 39).

Of the modified gum arabic samples (Preparation Examples 38-39) acquired as above, (1) the change in appearance and (2) the average molecular weight were investigated in the same manner as in Experimental Example 1. Furthermore, emulsions were prepared by using these modified gum arabic samples (Preparation Examples 38-39) in the same manner as in Experiment Example 1 and (3) the average particle diameter and the over-time stability of the emulsions were studied as in Experiment Example 1 to evaluate the emulsifying ability of each modified gum arabic.

The findings on (1) the change in appearance and (2) the average molecular weight of the modified gum arabic samples obtained in Preparation Examples 38-39 are presented in Table 15. The findings on (3) the average particle diameter and the over-time stability of emulsions prepared by using the above modified gum arabic samples are presented in Table 16.

**<Table 15>**

| Sample | Heating conditions | | Cooling conditions (25°C) | Average molecular weight | Change in appearance |
|---|---|---|---|---|---|
| | Temperature, time | Relative humidity | Relative humidity | | |
| Gum arabic (unmodofied) | - | - | - | 20x10⁴ | - |
| Preparation Example 38 | 60°C, 7days | 80% | 75% | 52x10⁴ | Unchanged in terms of agglomerati on or dehydration |
| Preparation Example 39 | 60°C, 7 days | 80% | 80% | 52x10⁴ | Slight agglomerati on |

**<Table 16>**

| Gum arabic used for preparation of an emulsion | Heating conditions (60°C) | Cooling conditions (25°C) | Average particle diameter of emulsion (µm) | | Stability (b-a) |
|---|---|---|---|---|---|
| | Relative humidity | Relative humidity | Immediately after preparation (a) | After 7 days at 60°C (b) | |
| Gum Arabic (unmodofied) | - | | 1.20 | 8.85 | 7.65 |
| Preparation Example 38 | 80% | 75% | 0.63 | 0.64 | 0.01 |
| Preparation Example 39 | 80% | 80% | 0.63 | 0.64 | 0.01 |

The above results indicate that the agglomeration observed to some extent in the heat treatment of gum arabic (unmodified) under the conditions of 60°C and 80% relative humidity could be avoided without affecting the emulsifying ability by conducting the subsequent cooling in a lower humidity environment. Moreover, as in Experiment Example 7, the emulsifying characteristics of the emulsion ware dependent on the heating condition adopted during the preparation of the modified gum arabic and ware indifferent to the cooling condition.

### Experiment Example 9

### <Modified gum arabic: Preparation Examples 40-43>

As shown in Table 17, 1 kg portions of gum arabic (unmodified) were respectively placed in a hermetically sealed constant-humidity vessel controlled to a relative humidity of 100% and held at 125°C or 150°C for 12 hours. Then, the gum arabic was transferred to a hermetically sealed constant-humidity vessel controlled to a relative humidity of 75% and cooled under the same humidity condition down to room temperature (25°C) to give modified gum arabic samples (Preparation Examples 40 and 42). As a comparison, modified gum arabic samples (Preparation Examples 41 and 43) were prepared by maintaining gum arabic at 125°C or 150°C under the relative humidity condition of 100% for 12 hours and, then, cooling it to room temperature (25°C) under the same humidity condition.

Of the modified gum arabic samples (Preparation Examples 40-43) acquired as above, (1) the change in appearance and (2) the average molecular weight were investigated in the same manner as in Experimental Example 1. Furthermore, emulsions were prepared by using these modified gum arabic samples (Preparation Examples 40-43) in the same manner as in Experiment Example 1 and (3) the average particle diameter and the over-time stability of the emulsions were studied as in Experiment Example 1 to evaluate the emulsifying ability of each modified gum arabic.

The findings on (1) the change in appearance and (2) the average molecular weight of the modified gum arabic samples obtained in Preparation Examples 40-43 are presented in Table 17. The findings on (3) the average particle diameter and the over-time stability of emulsions prepared by using the above modified gum arabic samples are presented in Table 18.

**<Table 17>**

| Sample | Heating conditions | | Cooling conditions | | Average molecular weight | Change in appearance |
|---|---|---|---|---|---|---|
| | Temperature, time | Humidity | Temperature | Relative humidity | | |
| Gum Arabic (unmodofied) | - | - | - | - | 20x10⁴ | - |
| Preparation Example 40 | 125°C, 12 hours | 100 % | 25°C | 75% | 58x10⁴ | Unchanged in terms of agglomeration or dehydration |
| Preparation Example 41 | 125°C, 12 hours | 100 % | 25°C | 100% | 58x10⁴ | Agglomeration with formation of large syrupy masses |
| Preparation Example 42 | 150°C, 12 hours | 100 % | 25°C | 75% | 62x10⁴ | Unchanged in agglomeration terms; slight surface dehydration of gum |
| Preparation Example 43 | 150°C, 12 hours | 100 % | 25°C | 100% | 62x10⁴ | Agglomeration with formation of large syrupy masses |

**<Table 18>**

| Gum arabic used for preparation of an emulsion | Heating conditions (12 hours) | Cooling conditions (25°C) | Average particle diameter of emulsion (µm) | | Stability (b-a) |
|---|---|---|---|---|---|
| | Relative humidity, temperature | Relative humidity | Immediately after preparation (a) | After 7 days C at 60°C (b) | |
| Gum Arabic (unmodofied) | - | - | 1.20 | 8.85 | 7.65 |
| Preparation Example 40 | 100%, 125°C | 75% | 0.61 | 0.61 | 0.00 |
| Preparation Example 41 | 100%, 125°C | 100% | 0.61 | 0.61 | 0.00 |
| Preparation Example 42 | 100%, 150°C | 75% | 0.63 | 0.66 | 0.03 |
| Preparation Example 43 | 100%, 150°C | 100% | 0.63 | 0.66 | 0.03 |

The above results indicate that the adhesion and agglomeration of gum observed in the heat treatment of gum arabic (unmodified) under the conditions of 125-150°C and 100% relative humidity and subsequent cooling at the same humidity can be eliminated without affecting the emulsifying ability by conducting the subsequent cooling under the relative humidity condition of 75%. Furthermore, as in Experiment Example 7, the emulsifying characteristics of the emulsion ware dependent on the heating condition adopted during the preparation of the modified gum arabic and ware indifferent to the cooling condition used.

### Experiment Example 10

### <Modified gum arabic: Preparation Example 44>

Seventy (70) kilograms of gum arabic (unmodified) was placed in a stainless steel drum can of 100 L capacity and after the lid was set in position for hermetic sealing and the internal atmosphere of the can was adjusted to a relative humidity of 95% and a temperature of 90°C, the gum was heat-treated for 12 hours. The drum can was then opened in a room controlled at a relative humidity of 50% and a temperature of 25°C and the gum arabic was cooled to a temperature of 25°C under the open condition (modified gum arabic: Preparation Example 44).

Of the modified gum arabic sample (Preparation Example 44) obtained in the above manner, (1) the change in appearance and (2) the average molecular weight were investigated and determined in the same manner as in Experiment Example 1. Furthermore, an emulsion was prepared with the above modified gum arabic (Preparation Example 44) by the same procedure as used in Experiment Example 1 and (3) the average particle diameter and the over-time stability of the emulsion were investigated as in Experiment Example 1 to evaluate the emulsifying ability of the modified gum arabic.

The results concerning (1) the change in appearance and (2) the average molecular weight are presented in Table 19. The results concerning (3) the average particle diameter and the over-time stability of the emulsion prepared with the above modified gum arabic are presented in Table 20.

**<Table 19>**

| Sample | Heating conditions (closed system) | | Cooling conditions (open system) | | Average molecular weight | Change in appearance |
|---|---|---|---|---|---|---|
| | Temperature | Relative humidity | Temperature | Relative humidity | | |
| Gum Arabic (unmodofied) | - | - | - | - | 20x10⁴ | - |
| Preparation Example 44 | 90°C | 95% | 25°C | 50% | 53x10⁴ | Unchanged in agglomerati on terms; slight surface dehydration of gum |

**<Table 20>**

| Gum arabic used for preparation of an emulsion | Heating condition (90°C) | Cooling condition (25°C) | Average particle diameter of emulsion (µm) | | Stability (b-a) |
|---|---|---|---|---|---|
| | Relative humidity | Relative humidity | Immediately after preparation (a) | After 7 days at 60°C (b) | |
| Gum Arabic (unmodofied) | - | - | 1.20 | 8.85 | 7.65 |
| Preparation Example 44 | Closed system : 95% | Open system : 50% | 0.62 | 0.63 | 0.01 |

It is apparent from the data in Table 20 that a modified gum arabic having an excellent emulsifying ability could be obtained by the above heat treatment (heating at 95% R.H. , 90°C). In terms of appearance, although agglomeration was found as the can was opened just after the heat treatment, the gum obtained on cooling under the low-humidity open condition was discrete without agglomeration, showing no change in appearance as compared with the untreated (unmodified) gum arabic.

### Example 1

### β-Carotene Emulsion (an emulsified color preparation)

| <Receipe> | (weight %) |
|---|---|
| β-Carotene, 30% suspension | 5 |
| Medium-chain triglyceride | 10 |
| Modified gum arabic (Preparation Example 44) | 17 |
| Water | 68 |
| Total | 100 weight % |

In 680 g of water was dissolved 170 g of the modified gum arabic (molecular weight 530,000) obtained in Preparation Example 44, and the solution was centrifuged to remove foreign matter, thus giving a 20 weight % aqueous gum arabic solution. This solution, as an emulsifier, was added to a composition prepared by dissolving 100 g of medium-chain triglyceride (octanoic/decanoic acid triglyceride O.D.O^{™} (product of the Nisshin Oil Mills)) and 50 g of a 30% suspension of β-carotene under heating at 150°C, followed by stirring. This mixture was emulsified with a homogenizer (manufactured by APV Gaulin) (homogenized 4 times at the pressure of 4.4 MPa (450 kg/cm²)) to give a β-carotene emulsion (emulsified color preparation).

### Example 2

### Orange emulsion flavoring (emulsified flavoring)

| <Receipe> | (weight %) |
|---|---|
| Orange flavor | 2 |
| Medium-chain triglyceride | 13 |
| Modified gum arabic (Preparation Example 44) | 17 |
| Water | 68 |
| Total | 100 weight % |

In 680 g of water was dissolved 170 g of the modified gum arabic (molecular weight 530,000) obtained in Preparation Example 44, and the solution was centrifuged to remove foreign matter, thus giving a 20 weight % aqueous gum arabic solution. This solution, as an emulsifier, was added to a composition prepared by mixing 130 g of medium-chain triglyceride (octanoic/decanoic acid triglyceride O.D.O^{™} (product of the Nisshin Mills)) and 20 g of an orange flavor thoroughly at room temperature, followed by stirring. This mixture was emulsified with a homogenizer (manufactured by APV Gaulin) (homogenized 4 times at the pressure of 4.4 MPa (450 kg/cm²)) to give an orange emulsion flavoring (emulsified flavoring).

### Example 3

### DHA (docosahexaenoic acid) emulsion

| <Recipe> | (weight %) |
|---|---|
| Fish oil with 20% DHA content | 5 |
| Medium-chain triglyceride | 10 |
| Modified gum arabic (Preparation Example 44) | 17 |
| Water | 68 |
| Total | 100 weight % |

In 680 g of water was dissolved 170 g of the modified gum arabic (molecular weight 530,000) obtained in Preparation Example 44, and the solution was centrifuged to remove foreign matter, thus giving a 20 weight % aqueous gum arabic solution. This solution, as an emulsifier, was added to a composition prepared by mixing 100 g of medium-chain triglyceride (octanoic/decanoic acid triglyceride O.D.O^{™} (product of the Nisshin Oil Mills)) and 50 g of a fish oil with 20% DHA content under heating at 80°C, followed by stirring. This mixture was emulsified with a homogenizer (manufactured by APV Gaulin) (homogenized 4 times at the pressure of 4.4 MPa (450 kg/cm²)) to give a DHA emulsion.

### INDUSTRIAL APPLICABILITY

In accordance with the method of the invention, a modified gum arabic having an improved emulsifying ability can be obtained by heating gum arabic in an atmosphere having a relative humidity of 30-100% at a temperature of not less than 60°C. Particularly by using a relative humidity of 30-80%, a modified gum arabic can be obtained with good efficiency while the agglomeration of gum arabic during heating is prevented.

Furthermore, in accordance with the invention, such a modified gum arabic can be efficiently obtained without involving agglomeration or mass formation of gum arabic by heating gum arabic in an atmosphere having a relative humidity of not less than 80%, particularly 80% or higher, to a temperature of not less than 60°C and, then, cooling it under a humidity condition lower than the relative humidity used for heating.

Therefore, the method of the invention is not only of great use as a method for providing a modified gum arabic having an improved emulsifying ability without affecting the subsequent workability or ease of handling, such as agglomeration, sticking or discoloration, but also is of great use as a method for modifying gum arabic to enhance its emulsifying ability with good efficiency.

The resulting modified gum arabic according to the invention can be used for the emulsification of various hydrophobic substances such as essential oils, oily colors, oily flavorings, fat-soluble vitamins, and so on. Compared with the emulsion prepared by using an ordinary (unmodified) gum arabic, the emulsion prepared by using the modified gum arabic of the invention has uniform particle diameter and shows high stability against abuses (severe condition) such as heating, long-term storage, change over time etc., not exhibiting the degradation of the particles from aggregating, adhering, etc.

## Claims

1. A method for modifying gum arabic which comprises a step of heating the gum arabic at a temperature of not less than 60°C in an atmosphere having a relative humidity of 30-100%.

2. The method for modifying gum arabic according to Claim 1, wherein the gum arabic is heated in an atmosphere having a relative humidity of 70-100%.

3. The method for modifying gum arabic according to Claim 1, wherein the gum arabic is heated under closed-system constant-humidity conditions.

4. The method for modifying gum arabic according to Claim 1, which comprises a step of heating the gum arabic at a temperature of 60-100°C in an atmosphere having a relative humidity of 30-80%.

5. The method for modifying gum arabic according to Claim 4, wherein the gum arabic is heated in an atmosphere having a relative humidity of 70-80%.

6. The method for modifying gum arabic according to Claim 1, which comprises a step of heating the gum arabic at a temperature of 60-150°C in an atmosphere having a relative humidity of 80-100% and cooling it to a temperature of not exceeding room temperature in an atmosphere having a relative humidity of not more than 75%.

7. The method for modifying gum arabic according to Claim 6, wherein the gum arabic is heated at a temperature of 60-100°C.

8. The method for modifying gum arabic according to Claim 1, which comprises a step of heating the gum arabic at a temperature of 60-150°C in a closed-system atmosphere having a relative humidity of 80-100% and then cooling it to room temperature in an open system.

9. The method for modifying gum arabic according to Claim 8, wherein the gum arabic is heated at a temperature of 60-100°C.

10. The method for modifying gum arabic according to Claim 1, which is a method for enhancing the emulsifying ability of gum arabic.

11. A use of the modified gum arabic obtained by the method according to Claim 1 for producing an emulsifier.

12. A method for preparing an emulsion which comprises using the modified gum arabic obtained by the method according to Claim 1 as an emulsifier.

13. The method for preparing an emulsion according to Claim 12 wherein the emulsion is an O/W or W/O /W emulsion which contains, as a dispersoid, at least one hydrophobic substance selected from the group consisting of essential oils, oily flavorings, oily colors, fat-soluble vitamins, polyunsaturated fatty acids, animal or vegetable oils, sucrose acetate isobutyrate, and medium-chain triglycerides.

## Patentansprüche

1. Verfahren zum Modifizieren von Gummi arabicum, welches einen Schritt des Erwärmens des Gummi arabicum bei einer Temperatur von nicht weniger als 60°C in einer Atmosphäre mit einer relativen Luftfeuchtigkeit von 30 bis 100% umfaßt.

2. Verfahren zum Modifizieren von Gummi arabicum nach Anspruch 1, wobei das Gummi arabicum in einer Atmosphäre mit einer relativen Luftfeuchtigkeit von 70 bis 100% erwärmt wird.

3. Verfahren zum Modifizieren von Gummi arabicum nach Anspruch 1, wobei das Gummi arabicum unter konstanten Feuchtigkeitsbedingungen eines geschlossenen Systems erwärmt wird.

4. Verfahren zum Modifizieren von Gummi arabicum nach Anspruch 1, welches einen Schritt des Erwärmens des Gummi arabicum bei einer Temperatur von 60 bis 100°C in einer Atmosphäre mit einer relativen Luftfeuchtigkeit von 30 bis 80% umfaßt.

5. Verfahren zum Modifizieren von Gummi arabicum nach Anspruch 4, wobei das Gummi arabicum in einer Atmosphäre mit einer relativen Luftfeuchtigkeit von 70 bis 80% erwärmt wird.

6. Verfahren zum Modifizieren von Gummi arabicum nach Anspruch 1, welches einen Schritt des Erwärmens des Gummi arabicum bei einer Temperatur von 60 bis 150°C in einer Atmosphäre mit einer relativen Luftfeuchtigkeit von 80 bis 100% und dessen Abkühlen auf eine Temperatur, welche Raumtemperatur nicht überschreitet, in einer Atmosphäre mit einer relativen Luftfeuchtigkeit von nicht mehr als 75% umfaßt.

7. Verfahren zum Modifizieren von Gummi arabicum nach Anspruch 6, wobei das Gummi arabicum bei einer Temperatur von 60 bis 100°C erwärmt wird.

8. Verfahren zum Modifizieren von Gummi arabicum nach Anspruch 1, welches einen Schritt des Erwärmens des Gummi arabicum bei einer Temperatur von 60 bis 150°C in einer Atmosphäre eines geschlossenen Systems mit einer relativen Luftfeuchtigkeit von 80 bis 100% und dann dessen Abkühlen auf Raumtemperatur in einem offenen System umfaßt.

9. Verfahren zum Modifizieren von Gummi arabicum nach Anspruch 8, wobei das Gummi arabicum auf eine Temperatur von 60 bis 100°C erwärmt wird.

10. Verfahren zum Modifizieren von Gummi arabicum nach Anspruch 1, welches ein Verfahren zur Verstärkung der Emulgierfähigkeit von Gummi arabicum ist.

11. Verwendung des modifizierten Gummi arabicum, erhalten durch das Verfahren nach Anspruch 1, zur Herstellung eines Emulgierungsmittels.

12. Verfahren zum Herstellen einer Emulsion, welches das Verwenden des modifzierten Gummi arabicum, erhalten durch das Verfahren nach Anspruch 1, als ein Emulgierungsmittel umfaßt.

13. Verfahren zum Herstellen einer Emulsion nach Anspruch 12, wobei die Emulsion eine O/W- oder W/O/W-Emulsion ist, welche als ein Dispersoid mindestens eine hydrophobe Substanz, ausgewählt aus der Gruppe, bestehend aus ätherischen Ölen, öligen Geschmacksstoffen, öligen Farben, fettlöslichen Vitaminen, mehrfach ungesättigten Fettsäuren, tierischen oder pflanzlichen Ölen, Saccharoseacetatisobutyrat und Triglyceriden mittlerer Kettenlänge, enthält.

## Revendications

1. Procédé de modification d'une gomme arabique qui comprend une étape consistant à chauffer la gomme arabique à une température de pas moins de 60 °C dans une atmosphère présentant une humidité relative de 30 à 100 %.

2. Procédé de modification d'une gomme arabique selon la revendication 1, dans lequel la gomme arabique est chauffée dans une atmosphère présentant une humidité relative de 70 à 100 %.

3. Procédé de modification d'une gomme arabique selon la revendication 1, dans lequel la gomme arabique est chauffée dans des conditions de système fermé à humidité constante.

4. Procédé de modification d'une gomme arabique selon la revendication 1, qui comprend une étape consistant à chauffer la gomme arabique à une température de 60 à 100 °C dans une atmosphère présentant une humidité relative de 30 à 80 %.

5. Procédé de modification d'une gomme arabique selon la revendication 4, dans lequel la gomme arabique est chauffée dans une atmosphère présentant une humidité relative de 70 à 80 %.

6. Procédé de modification d'une gomme arabique selon la revendication 1, qui comprend une étape consistant à chauffer la gomme arabique à une température de 60 à 150 °C dans une atmosphère présentant une humidité relative de 80 à 100 % et à la refroidir à une température ne dépassant pas la température ambiante dans une atmosphère présentant une humidité relative de pas plus de 75 %.

7. Procédé de modification d'une gomme arabique selon la revendication 6, dans lequel la gomme arabique est chauffée à une température de 60 à 100 °C.

8. Procédé de modification d'une gomme arabique selon la revendication 1, qui comprend une étape consistant à chauffer la gomme arabique à une température de 60 à 150 °C dans une atmosphère de système fermé présentant une humidité relative de 80 à 100 % et ensuite à la refroidir à la température ambiante dans un système ouvert.

9. Procédé de modification d'une gomme arabique selon la revendication 8, dans lequel la gomme arabique est chauffée à une température de 60 à 100 °C.

10. Procédé de modification d'une gomme arabique selon la revendication 1, qui est un procédé d'amplification de la capacité d'émulsification de la gomme arabique.

11. Utilisation de la gomme arabique modifiée obtenue par le procédé selon la revendication 1 pour produire un émulsifiant.

12. Procédé de préparation d'une émulsion qui comprend l'utilisation de la gomme arabique modifiée obtenue par le procédé selon la revendication 1 en tant qu'émulsifiant.

13. Procédé de préparation d'une émulsion selon la revendication 12, dans lequel l'émulsion est une émulsion H/E ou E/H/E qui contient, en tant que dispersoïde, au moins une substance hydrophobe choisie dans le groupe constitué d'huiles essentielles, d'aromatisants huileux, de couleurs huileuses, de vitamines solubles dans les graisses, d'acides gras poly-insaturés, d'huiles animales ou végétales, d'acétate-isobutyrate de saccharose et de triglycérides à chaîne moyenne.
